# EUROPÄISCHE PATENTSCHRIFT

(11) **EP 4 094 994 B1**
(45) Veröffentlichungstag und Bekanntmachung des Hinweises auf die Patenterteilung: **02.07.2025**
(21) Anmeldenummer: 22174965.8
(22) Anmeldetag: 23.05.2022
(51) Int. Cl.: B60R 15/02, A47K 3/28, A47K 4/00

(54) **DUSCHEINRICHTUNG FÜR EIN WOHNMOBIL**
SHOWER DEVICE FOR A MOBILE HOME
DISPOSITIF DE DOUCHE POUR UN CAMPING-CAR

(30) Priorität: 23.05.2021 DE 102021113374
(43) Veröffentlichungstag der Anmeldung: 30.11.2022
(73) Patentinhaber: Hymer GmbH & Co. KG, 88339 Bad Waldsee (DE)
(72) Erfinder: Steigmiller, Anton, 88444 Ummendorf (DE)
(74) Vertreter: Müller Schupfner & Partner Patent- und Rechtsanwaltspartnerschaft mbB (Muc)

(56) Entgegenhaltungen:
- WO-A1-00/27266
- WO-A1-2020/087118
- WO-A1-96/11124
- DE-A1- 102005 021 702
- DE-U1- 20 003 780
- DE-U1- 202004 017 165

## Beschreibung

Die Erfindung betrifft eine Duscheinrichtung für ein Wohnmobil und ein Wohnmobil mit solch einer Duscheinrichtung.

Aus der DE 199 48 182 A1 ist eine Duscheinrichtung für ein Wohnmobil bekannt. Wenn die Dusche nicht benutzt wird, dann ist eine Duschwanne der Duscheinrichtung von einer Abdeckung verschlossen, wobei ein zusammengelegter Vorhang in die Duschwanne unter die Abdeckung eingelegt ist. Somit steht der für das Duschen vorgesehene Bereich dann für andere Nutzungsmöglichkeiten zur Verfügung. Beispielsweise kann eine Person dann auf der Abdeckung stehen, um ein neben dem Duschbereich vorgesehenes Waschbecken zu nutzen.

Die aus der DE 199 48 182 A1 bekannte Duscheinrichtung hat den Nachteil, dass der Duschbereich im Vergleich zum gesamten Raumbedarf der Nasszelle klein ist. Hierbei kann eine Person, die die Dusche nutzt, bei geöffneter Abdeckung nur in einem Teil der Duschwanne stehen. Ferner muss die Person hierbei auf einer das Ablaufen des verbrauchten Duschwassers begünstigenden kegelförmigen Fläche stehen. Dies ist im Vergleich zum Stehen auf einer zumindest näherungsweise horizontalen Fläche unangenehm. Des Weiteren ist die Duschwanne, auch um den Duschvorhang bei geschlossener Abdeckung aufnehmen zu können, deutlich tiefer als der angrenzende Fahrzeugboden angeordnet, so dass die Person beim Betreten und Verlassen der Duschwanne eine Stufe überwinden muss. Die erschwert auch ein Reinigen der Duschwanne.

Aus der DE 295 03 469 U1 ist eine kompakte Nasszelle für ein Wohnmobil bekannt. Bei der bekannten Nasszelle ist ein bestimmter Bereich der Nasszelle ausschließlich zum Duschen vorgesehen. Ein Duschboden ist hierbei gegenüber dem übrigen Waschraumboden der Nasszelle vertieft angeordnet. Ferner ist der Boden des Duschbereichs durch eine Wasserauffangrinne vom Boden des Waschbereichs getrennt. Bei einer weiteren, aus diesem Stand der Technik bekannten Ausgestaltung kann der Boden des Duschbereichs dadurch auch auf gleicher Höhe mit dem Waschraumboden liegen. Bei diesen Ausgestaltungen kann der Boden des Duschbereichs eben und horizontal ausgeführt werden. Ferner kann eine Stufe zwischen dem Duschboden und dem Waschraumboden vergleichsweise klein ausgeführt werden oder auch ganz entfallen. Die Abtrennung der Dusche erfolgt über eine Trennwand aus mehreren klappbaren Elementen, die scharnierartig miteinander verbunden sind.

Die aus der DE 295 03 469 U1 bekannte Nasszelle hat den Nachteil, dass die Wasserauffangrinne in der Nasszelle eine unerwünschte Vertiefung darstellt. Die Druckschrift WO 00/27266 beschreibt Duschkabinen beispielsweise für Wohnmobile. Ein Bodenteil ist bei Gebrauch auf dem gleichen Niveau wie ein Boden und kann für eine Warteposition über den Boden und eine Abflusswanne erhoben werden und darüberfahren.

Der vorliegenden Erfindung liegt die Aufgabe zugrunde, eine Duscheinrichtung und ein Wohnmobil mit solch einer Duscheinrichtung anzugeben, die in verbesserter Weise ausgestaltet sind.

Diese Aufgabe wird durch eine Duscheinrichtung mit den Merkmalen der unabhängigen Ansprüche 1 und 3 und durch ein Wohnmobil mit den Merkmalen des Patentanspruchs 10 gelöst. Vorteilhafte Weiterbildungen der Erfindung sind in den Unteransprüchen angegeben.

Die Aufgabe wird erfindungsgemäß dadurch gelöst, dass dass der betretbare Boden zumindest teilweise durch eine bewegbare Bodenplatte gebildet ist, dass die bewegbare Bodenplatte durch einen Betätigungsmechanismus aus einer Ausgangsposition in eine Duschposition bewegbar ist und dass zumindest ein Abfluss vorgesehen ist, der in der Ausgangsposition von der bewegbaren Bodenplatte zumindest im wesentlichen überdeckt und in der Duschposition von der bewegbaren Bodenplatte freigegeben ist.

Dies hat je nach Ausgestaltung der Duscheinrichtung den Vorteil, dass in der Ausgangsposition, also wenn die Duscheinrichtung nicht benutzt wird, eine ebener Boden realisiert werden kann. Eine Rinne, Rille oder dergleichen, die beim darauf Treten unangenehm sein kann, eine Verletzungsgefahr darstellen kann und/oder in der sich Schmutz sammeln kann, kann dadurch abgedeckt werden. Dadurch kann sich auch ein Reinigungsaufwand verringern.

Vorteilhaft ist es, dass die bewegbare Bodenplatte im montierten Zustand der Duscheinrichtung in einem Wohnmobil zumindest in einem von der Person betretbaren Bereich zumindest näherungsweise auf einem Höhenniveau angeordnet ist, das durch einen von der Person betretbaren Wohnmobilboden neben der Duscheinrichtung vorgegeben ist. Dadurch wird eine Stufe beim Betreten der Dusche beziehungsweise der Bodenplatte vermieden, was einen hohen Benutzungskomfort ermöglicht.

Erfindungsgemäß ist es, dass der Abfluss zumindest eine Auffangrinne aufweist, dass die bewegbare Bodenplatte in der Duschposition so angeordnet ist, dass im Betrieb ein Ablaufen von verbrauchtem Duschwasser von der bewegbaren Bodenplatte an zumindest einer Außenkante der bewegbaren Bodenplatte in die Auffangrinne ermöglicht ist und dass die bewegbare Bodenplatte die Auffangrinne in der Ausgangsposition überdeckt. Dadurch wird eine unerwünschte Unebenheit im Boden vermieden. Dies ist besonders vorteilhaft, wenn sich die Bodenplatte in einen Flur, Wohnbereich oder dergleichen des Wohnmobils erstreckt. Entsprechend ist es somit vorteilhaft, dass die bewegbare Bodenplatte im montierten Zustand der Duscheinrichtung in einem Wohnmobil zumindest in einem von der Person betretbaren Bereich zumindest näherungsweise auf einem Höhenniveau angeordnet ist, das durch einen von der Person betretbaren Wohnmobilboden neben der Duscheinrichtung vorgegeben ist. Dies vermeidet eine Stufe.

Erfindungsgemäß ist es, dass eine Schwenkwand vorgesehen ist und dass bei einem Schwenken der Schwenkwand aus einer Ausgangsposition der Schwenkwand in eine Duschposition der Schwenkwand über den Betätigungsmechanismus ein Bewegen der der Bodenplatte aus der Ausgangsposition der Bodenplatte in die Duschposition der Bodenplatte erfolgt. Die Schwenkwand kann hierbei in ihrer Duschposition die Funktion eines Teils einer Trennwand der Dusche übernehmen. An der Schwenkwand kann auch ein Spiegel angebracht sein, der in der Ausgangsposition der Schwenkwand nutzbar ist.

Erfindungsgemäß ist es, dass der Betätigungsmechanismus eine in der der bewegbaren Bodenplatte ausgebildete exzentrische Nut und ein zumindest zum Bewegen der bewegbare Bodenplatte in der exzentrischen Nut geführtes Element aufweist, das an der Schwenkwand ausgebildet oder mit der Schwenkwand verbunden ist, und dass die exzentrische Nut so ausgestaltet ist, dass beim Schwenken der Schwenkwand aus ihrer Ausgangsposition in ihre Duschposition oder aus ihrer Duschposition in ihre Ausgangsposition über das in der exzentrischen Nut geführte Element eine mechanische Kraftübertragung von der Schwenkwand auf die bewegbare Bodenplatte erfolgt, die eine entsprechende Bewegung der Bodenplatte aus ihrer Ausgangsposition in ihre Duschposition beziehungsweise aus ihrer Duschposition in ihre Ausgangsposition bewirkt. Dadurch ergibt sich ein vorteilhafter Betätigungsmechanismus, der beispielsweise so ausgebildet sein kann, dass die Person mit Muskelkraft die Schwenkwand schwenkt und hierbei auch die bewegbare Bodenplatte verstellt. Die Person steht hierbei neben der Bodenplatte.

Vorteilhaft ist es, dass an der Schwenkwand ein Waschbecken vorgesehen ist. Hierdurch ist eine besonders platzsparende Ausgestaltung möglich. Vorteilhaft ist es hierbei auch, dass das an der Schwenkwand vorgesehene Waschbecken beim Schwenken der Schwenkwand aus ihrer Ausgangsposition in ihre Duschposition zumindest teilweise über ein Toilettenbecken schwenkbar ist. Dies ermöglicht in Bezug auf die Größe der Nasszelle eine weitere Vergrößerung des zum Duschen zur Verfügung stehenden Raumanteils der Nasszelle.

Vorteilhaft ist es, dass der Betätigungsmechanismus einen elektromechanischen Betätigungsmechanismus aufweist, der zumindest mittelbar die Bodenplatte bewegt. Beispielsweise kann der elektromechanische Betätigungsmechanismus die Schwenkwand und damit mittelbar die bewegbare Bodenplatte verstellen. Der elektromechanische Betätigungsmechanismus kann aber auch direkt auf die bewegbare Bodenplatte einwirken.

Vorteilhaft ist es, dass der Abfluss in der Ausgangsposition von der bewegbaren Bodenplatte vollständig überdeckt ist. Dies ist insbesondere dann von Vorteil, wenn die bewegbare Bodenplatte nicht nur in der Nasszelle sondern auch teilweise in einem anderen Bereich, insbesondere einem Flur oder einem Aufenthaltsraum, des Wohnmobils angeordnet ist. Dadurch kann der zum Duschen zur Verfügung stehende Raum weiter vergrößert werden.

Vorteilhaft ist es, dass die bewegbare Bodenplatte in der Ausgangsposition von einer Person entfernbar ist. Dadurch ist ein einfaches Reinigen der Duscheinrichtung möglich.

Vorteilhaft ist es, dass neben der Duscheinrichtung ein Wohnmobilboden vorgesehen ist, dass die bewegbare Bodenplatte in der Ausgangsposition zumindest im Wesentlichen stufenlos und zumindest im wesentlichen spaltfrei an den Wohnmobilboden angefügt ist und dass in der Duschposition der bewegbaren Bodenplatte zwischen der bewegbare Bodenplatte und dem Wohnmobilboden der Abfluss geöffnet ist. Der Wohnmobilboden kann hierbei auch in einem Flur und/oder oder einen Aufenthaltsraum des Wohnmobils vorgesehen sein.

Weitere Vorteile und Einzelheiten der Erfindung werden anhand der in den schematischen Figuren dargestellten Ausführungsbeispiele näher erläutert. Hierbei zeigen:
- Fig. 1: eine Duscheinrichtung in einer schematischen Darstellung entsprechend einem Ausführungsbeispiel, wobei eine bewegbare Bodenplatte und eine Schwenkwand jeweils in einer Ausgangsposition dargestellt sind;
- Fig. 2: eine Duscheinrichtung in einer schematischen Darstellung entsprechend einem Ausführungsbeispiel, wobei eine bewegbare Bodenplatte und eine Schwenkwand jeweils in einer Duschposition dargestellt sind und
- Fig. 3: eine Detail der in Fig. 2 dargestellten Duscheinrichtung in einer schematischen Darstellung.

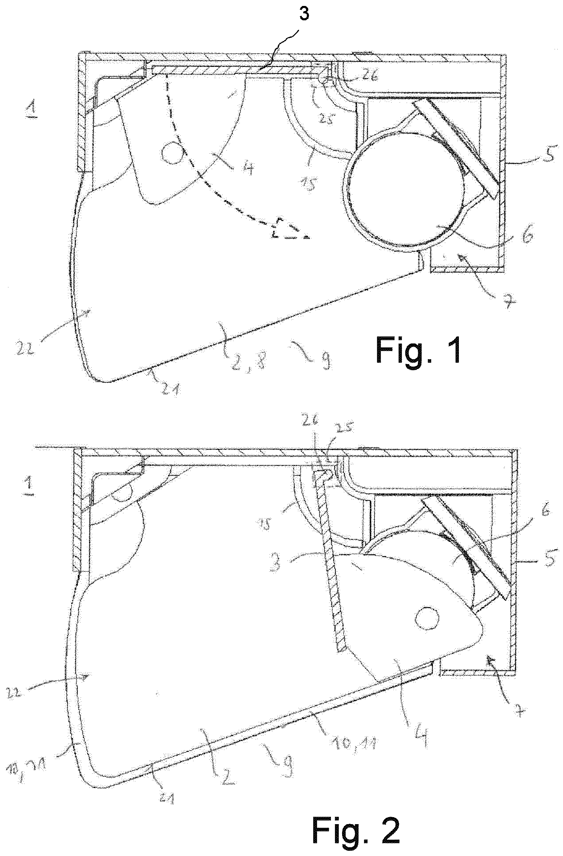

Fig. 1 zeigt eine Duscheinrichtung 1 in einer schematischen Darstellung entsprechend einem Ausführungsbeispiel, wobei eine bewegbare Bodenplatte 2 in einer Ausgangsstellung und eine Schwenkwand 3 in einer Ausgangsstellung dargestellt sind. Fig. 2 zeigt die Duscheinrichtung 1 in einer schematischen Darstellung entsprechend dem Ausführungsbeispiel, wobei die bewegbare Bodenplatte 2 in einer Duschposition und die Schwenkwand 3 in einer Duschposition dargestellt sind.

Die Duscheinrichtung 1 weist die bewegbare Bodenplatte 2 und die Schwenkwand 3 auf. Ferner weist die Duscheinrichtung 1 in diesem Ausführungsbeispiel ein an der Schwenkwand 3 vorgesehenes Waschbecken 4 auf. Dadurch ermöglicht die Duscheinrichtung 1 in der Ausgangsposition eine Nutzung des Waschbeckens 4, so dass der Funktionsumfang in integrierter Weise erweitert ist. Die Duscheinrichtung 1 kann zumindest teilweise innerhalb einer Waschraumwand 5 untergebracht sein. Hierbei kann zusätzlich ein Toilettenbecken 6 vorgesehen sein. Vorzugsweise ist dann das Waschbecken 4 in der Duschposition über das Toilettenbecken 6 geschwenkt. Auf diese Weise kann eine optimierte Platzausnutzung zur Realisierung einer Nasszelle 7 erfolgen.

Je nach Ausgestaltung der Duscheinrichtung 1 kann der von einer Person betretbare Boden 8 der Duscheinrichtung 1 bereits durch die bewegbare Bodenplatte 2 gegeben sein. Ferner ist ein Wohnmobilboden 9 vorgesehen.

Wenn die Schwenkwand 3 aus der in der Fig. 1 dargestellten Ausgangsposition in die in der Fig. 2 dargestellte Duschposition verstellt wird, wobei eine entsprechende Verstellung der bewegbaren Bodenplatte 2 erfolgt, dann wird zwischen dem Wohnmobilboden 9 und der bewegbaren Bodenplatte 2 eine Auffangrille 10 eines Abflusses 11 freigegeben. Verbrauchtes Duschwasser kann dann von der bewegbaren Bodenplatte 2 in die Auffangrille 10 fließen. In der Ausgangsposition fügt sich die bewegbare Bodenplatte 2 spaltlos und eben an den Wohnmobilboden 9 an. Die Auffangrille 10 des Abflusses 11 ist hierbei vollständig überdeckt.

In der bewegbaren Bodenplatte 2 ist eine exzentrische Nut 15 ausgebildet.

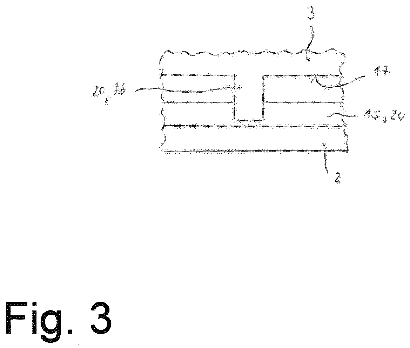

Fig. 3 zeigt ein Detail der in der Fig. 2 dargestellten Duscheinrichtung 1 in einer schematischen Darstellung. In die exzentrische Nut 15 der bewegbaren Bodenplatte 2 greift ein Element 16 ein, das in diesem Ausführungsbeispiel an einer Unterseite 17 der Schwenkwand 3 ausgebildet ist. Das Element 16 ist hierbei in der exzentrischen Nut 15 geführt. Hierdurch ist ein Betätigungsmechanismus 20 gebildet. Ein Schwenken der Schwenkwand 3 verursacht dann eine entsprechende Bewegung der bewegbaren Bodenplatte 2.

In diesem Ausführungsbeispiel läuft das verbrauchte Duschwasser an einer Außenkante 21 der bewegbaren Bodenplatte 2 in die Auffangrille 10, wenn sich die bewegbare Bodenplatte 2 in der Duschposition befindet. Ein von der Person betretbarer Bereich 22 der bewegbaren Bodenplatte 2 ist vorzugsweise eben ausgeführt und kann sich beispielsweise in einen Flur und/oder einen Aufenthaltsbereich innerhalb des Wohnmobils erstrecken. Die bewegbare Bodenplatte 2 kann durch zumindest eine Feder und/oder zumindest einen Gasdruckdämpfer in Position gehalten werden. Hierbei kann die bewegbare Bodenplatte 2 auch entnehmbar sein. In der Ausgangsstellung verlässt in diesem Ausführungsbeispiel das Element 16 der Schwenkwand 3 die exzentrische Nut 15, wie es aus den Fig. 1 und 3 ersichtlich ist. Dies ermöglicht die Entnahme der bewegbaren Bodenplatte 2.

Somit kann in der Ausgangsposition erreicht werden, dass keine permanent vorhandenen Rillen oder Rinnen, die ein unangenehmes Laufgefühl oder eine Verletzungsgefahr bergen, freiliegen. In der Duschposition sind solche Rillen, Rinnen oder dergleichen, die hier als Auffangrille 10 dienen, im Boden geöffnet, so dass ein zielgerichtetes Ablaufen des Duschwassers in den Abfluss 11 gesichert ist. Ferner kann die bewegbare Bodenplatte 2 zumindest näherungsweise horizontal und eben zum Wohnmobilboden 9 ausgerichtet sein. Dadurch ist zumindest der von einer Person betretbare Bereich 22 der bewegbaren Bodenplatte 2 auf dem gleichen Höhenniveau angeordnet, wie der Wohnmobilboden 9.

Bei einer abgewandelten Ausgestaltung kann auch ein elektromechanischer Betätigungsmechanismus 25 vorgesehen sein, der schematisch mittels einer unterbrochen dargestellten Linie dargestellt ist. Der elektromechanische Betätigungsmechanismus 25 kann an der Drehachse 26 der Schwenkwand 3 angreifen und somit mittels der Schwenkwand 3 und dem Betätigungsmechanismus 20 auch die bewegbare Bodenplatte 2 verstellen.

Die Erfindung ist nicht auf die beschriebenen Ausführungsformen beschränkt.

## Patentansprüche

1. Duscheinrichtung (1) für ein Wohnmobil, wobei ein von zumindest einer Person betretbarer Boden (8) vorgesehen ist, wobei der betretbare Boden (8) zumindest teilweise durch eine bewegbare Bodenplatte (2) gebildet ist, dass die bewegbare Bodenplatte (2) durch einen Betätigungsmechanismus (20) aus einer Ausgangsposition in eine Duschposition bewegbar ist und dass zumindest ein Abfluss (11) vorgesehen ist, der in der Ausgangsposition von der bewegbaren Bodenplatte (2) zumindest im Wesentlichen überdeckt und in der Duschposition von der bewegbaren Bodenplatte (2) freigegeben ist,
**dadurch gekennzeichnet,**
**dass** der Abfluss (11) zumindest eine Auffangrinne (10) aufweist, dass die bewegbare Bodenplatte (2) in der Duschposition so angeordnet ist, dass im Betrieb ein Ablaufen von verbrauchtem Duschwasser von der bewegbaren Bodenplatte (2) an zumindest einer Außenkante (21) der bewegbaren Bodenplatte (2) in die Auffangrinne (10) ermöglicht ist und dass die bewegbare Bodenplatte (2) die Auffangrinne (10) in der Ausgangsposition überdeckt.

2. Duscheinrichtung nach Anspruch 1,
**dadurch gekennzeichnet,**
**dass** eine Schwenkwand (3) vorgesehen ist und dass bei einem Schwenken der Schwenkwand (3) aus einer Ausgangsposition der Schwenkwand (3) in eine Duschposition der Schwenkwand (3) über den Betätigungsmechanismus (20) ein Bewegen der der Bodenplatte (2) aus der Ausgangsposition der Bodenplatte (2) in die Duschposition der Bodenplatte (2) erfolgt.

3. Duscheinrichtung (1) für ein Wohnmobil, wobei ein von zumindest einer Person betretbarer Boden (8) vorgesehen ist, wobei der betretbare Boden (8) zumindest teilweise durch eine bewegbare Bodenplatte (2) gebildet ist, dass die bewegbare Bodenplatte (2) durch einen Betätigungsmechanismus (20) aus einer Ausgangsposition in eine Duschposition bewegbar ist und dass zumindest ein Abfluss (11) vorgesehen ist, der in der Ausgangsposition von der bewegbaren Bodenplatte (2) zumindest im Wesentlichen überdeckt und in der Duschposition von der bewegbaren Bodenplatte (2) freigegeben ist,
wobei eine Schwenkwand (3) vorgesehen ist und dass bei einem Schwenken der Schwenkwand (3) aus einer Ausgangsposition der Schwenkwand (3) in eine Duschposition der Schwenkwand (3) über den Betätigungsmechanismus (20) ein Bewegen der Bodenplatte (2) aus der Ausgangsposition der Bodenplatte (2) in die Duschposition der Bodenplatte (2) erfolgt, **dadurch gekennzeichnet, dass** der Betätigungsmechanismus (20) eine in der der bewegbaren Bodenplatte (2) ausgebildete exzentrische Nut (15) und ein zumindest zum Bewegen der bewegbare Bodenplatte (2) in der exzentrischen Nut (15) geführtes Element (16) aufweist, das an der Schwenkwand (3) ausgebildet oder mit der Schwenkwand (3) verbunden ist, und dass die exzentrische Nut (15) so ausgestaltet ist, dass beim Schwenken der Schwenkwand (3) aus ihrer Ausgangsposition in ihre Duschposition oder aus ihrer Duschposition in ihre Ausgangsposition über das in der exzentrischen Nut (15) geführte Element (16) eine mechanische Kraftübertragung von der Schwenkwand (3) auf die bewegbare Bodenplatte (2) erfolgt, die eine entsprechende Bewegung der Bodenplatte (2) aus ihrer Ausgangsposition in ihre Duschposition beziehungsweise aus ihrer Duschposition in ihre Ausgangsposition bewirkt.

4. Duscheinrichtung bestehend aus einer Kombination eines der Ansprüche 1 oder 2 jeweils mit dem Anspruch 3;

5. Duscheinrichtung nach einem der Ansprüche 2 bis 4,
**dadurch gekennzeichnet,**
**dass** an der Schwenkwand (3) ein Waschbecken (4) vorgesehen ist.

6. Duscheinrichtung nach Anspruch 5,
**dadurch gekennzeichnet,**
**dass** das an der Schwenkwand (3) vorgesehene Waschbecken (4) beim Schwenken der Schwenkwand (3) aus ihrer Ausgangsposition in ihre Duschposition zumindest teilweise über ein Toilettenbecken (6) schwenkbar ist.

7. Duscheinrichtung nach einem der Ansprüche 1 bis 6,
**dadurch gekennzeichnet,**
**dass** die bewegbare Bodenplatte (2) im montierten Zustand der Duscheinrichtung (1) in einem Wohnmobil zumindest in einem von der Person betretbaren Bereich (22) zumindest näherungsweise auf einem Höhenniveau angeordnet ist, das durch einen von der Person betretbaren Wohnmobilboden (9) neben der Duscheinrichtung vorgegeben ist.

8. Duscheinrichtung nach einem der Ansprüche 1 bis 7,
**dadurch gekennzeichnet,**
**dass** der Betätigungsmechanismus (20) einen elektromechanischen Betätigungsmechanismus (25) aufweist, der zumindest mittelbar die Bodenplatte (2) bewegt.

9. Duscheinrichtung nach einem der Ansprüche 1 bis 8,
**dadurch gekennzeichnet,**
**dass** der Abfluss (11) in der Ausgangsposition von der bewegbaren Bodenplatte (2) vollständig überdeckt ist und/oder dass die bewegbare Bodenplatte (2) in der Ausgangsposition von einer Person entfernbar ist.

10. Wohnmobil mit einer Duscheinrichtung nach einem der Ansprüche 1 bis 9, **dadurch gekennzeichnet,**
**dass** neben der Duscheinrichtung (1) ein Wohnmobilboden (9) vorgesehen ist, dass die bewegbare Bodenplatte (2) in der Ausgangsposition zumindest im Wesentlichen stufenlos und zumindest im wesentlichen spaltfrei an den Wohnmobilboden (9) anfügt ist und dass in der Duschposition der bewegbaren Bodenplatte (2) zwischen der bewegbare Bodenplatte (2) und dem Wohnmobilboden (9) der Abfluss (11) geöffnet ist.

## Claims

1. Shower device (1) for a motor home, wherein a floor (8) which can be accessed by at least one person is provided, wherein the accessible floor (8) is at least partially formed by a movable floor plate (2), that the movable floor plate (2) can be moved by an actuating mechanism (20) from an initial position into a showering position, and that at least one drain (11) is provided which is at least substantially covered by the movable floor plate (2) in the initial position and is released by the movable floor plate (2) in the showering position,
**characterised in that**
the drain (11) has at least one drip tray (10), **in that** the movable floor plate (2) is arranged in the showering position in such a way that, during operation, used shower water is able to drain from the movable floor plate (2) at at least one outer edge (21) of the movable floor plate (2) into the drip tray (10), and **in that** the movable floor plate (2) covers the drip tray (10) in the initial position.

2. Shower device according to claim 1,
**characterised in that**
a swivelling wall (3) is provided and **in that**, when the swivelling wall (3) is swivelled from an initial position of the swivelling wall (3) into a showering position of the swivelling wall (3), the floor plate (2) is moved from the initial position of the floor plate (2) into the showering position of the floor plate (2) via the actuating mechanism (20).

3. Shower device (1) for a motor home, wherein a floor (8) which can be accessed by at least one person is provided, wherein the accessible floor (8) is at least partially formed by a movable floor plate (2), that the movable floor plate (2) can be moved by an actuating mechanism (20) from an initial position into a showering position, and that at least one drain (11) is provided which is at least substantially covered by the movable floor plate (2) in the initial position and is released by the movable floor plate (2) in the showering position,
wherein
a swivelling wall (3) is provided and that when the swivelling wall (3) is swivelled from an initial position of the swivelling wall (3) into a showering position of the swivelling wall (3), the floor plate (2) is moved from the initial position of the floor plate (2) into the showering position of the floor plate (2) via the actuating mechanism (20), **characterised in that**
the actuating mechanism (20) has an eccentric groove (15) formed in the movable floor plate (2) and an element (16) which is guided in the eccentric groove (15) at least for moving the movable floor plate (2) and which is formed on the swivelling wall (3) or is connected to the swivelling wall (3), and **in that** the eccentric groove (15) is designed in such a way that when the swivelling wall (3) is swivelled from its initial position into its showering position or from its showering position into its initial position, a mechanical force is transmitted from the swivelling wall (3) to the movable floor plate (2) via the element (16) guided in the eccentric groove (15), which causes a corresponding movement of the floor plate (2) from its initial position to its showering position or from its showering position to its initial position.

4. Shower device comprising a combination of one of claims 1 or 2 with claim 3;

5. Shower device according to one of claims 2 to 4,
**characterised in that**
a sink (4) is provided on the swivelling wall (3).

6. Shower device according to claim 5,
**characterised in that**
the sink (4) provided on the swivelling wall (3) can be swivelled at least partially over a toilet bowl (6) when the swivelling wall (3) is swivelled from its initial position into its showering position.

7. Shower device according to one of claims 1 to 6,
**characterised in that,**
when the shower device (1) is installed in a motor home, the movable floor plate (2) is arranged in at least one area (22), which can be accessed by the person, at least approximately at a height level predetermined by a motorhome floor (9) accessible to the person next to the shower device.

8. Shower device according to one of claims 1 to 7,
**characterised in that**
the actuating mechanism (20) comprises an electromechanical actuating mechanism (25) which at least indirectly moves the floor plate (2).

9. Shower device according to one of claims 1 to 8,
**characterised in that**
the drain (11) is completely covered by the movable floor plate (2) in the initial position and/or **in that** the movable floor plate (2) can be removed by a person in the initial position.

10. Motor home with a shower device according to one of claims 1 to 9, **characterised in that**
a motorhome floor (9) is provided next to the shower device (1), **in that** the movable floor plate (2) is attached to the motorhome floor (9) in the initial position at least essentially without steps and at least essentially without gaps, and **in that** the drain (11) is open between the movable floor plate (2) and the motorhome floor (9) in the showering position of the movable floor plate (2).

## Revendications

1. Moyen de douche (1) pour un camping-car, dans lequel il est prévu un sol praticable (8) par au moins une personne, dans lequel le sol praticable (8) est formé au moins en partie par une plaque de sol mobile (2), la plaque de sol mobile (2) peut être déplacée via un mécanisme d'actionnement (20) depuis une position de départ jusque dans une position de douche, et il est prévu au moins une évacuation (11) qui, dans la position de départ, est au moins sensiblement recouverte par la plaque de sol mobile (2) et qui, dans la position de douche, est libérée par la plaque de sol mobile (2),
**caractérisé en ce que**
l'évacuation (11) présente au moins une rigole collectrice (10),
dans la position de douche, la plaque de sol mobile (2) est agencée de telle sorte qu'il est possible, pendant l'utilisation, de faire s'écouler l'eau de douche usée dans la rigole collectrice (10), depuis la plaque de sol mobile (2) jusqu'à au moins un bord extérieur (21) de la plaque de sol mobile (2), et dans la position de départ, la plaque de sol mobile (2) recouvre la rigole collectrice (10).

2. Moyen de douche selon la revendication 1,
**caractérisé en ce que**
il est prévu une paroi pivotante (3), et
un pivotement de la paroi pivotante (3) depuis une position de départ de la paroi pivotante (3) jusque dans une position de douche de la paroi pivotante (3) via le mécanisme d'actionnement (20) entraîne un déplacement de la plaque de sol (2) depuis la position de départ de la plaque de sol (2) jusque dans la position de douche de la plaque de sol (2).

3. Moyen de douche (1) pour un camping-car, dans lequel il est prévu un sol praticable (8) par au moins une personne, dans lequel le sol praticable (8) est formé au moins en partie par une plaque de sol mobile (2), la plaque de sol mobile (2) peut être déplacée via un mécanisme d'actionnement (20) depuis une position de départ jusque dans une position de douche, et il est prévu au moins une évacuation (11) qui, dans la position de départ, est au moins sensiblement recouverte par la plaque de sol mobile (2) et qui, dans la position de douche, est libérée par la plaque de sol mobile (2),
dans lequel il est prévu une paroi pivotante (3), et un pivotement de la paroi pivotante (3) depuis une position de départ de la paroi pivotante (3) jusque dans une position de douche de la paroi pivotante (3) via le mécanisme d'actionnement (20) entraîne un déplacement de la plaque de sol (2) depuis la position de départ de la plaque de sol (2) jusque dans la position de douche de la plaque de sol (2),
**caractérisé en ce que**
le mécanisme d'actionnement (20) présente une gorge excentrée (15) réalisée dans la plaque de sol mobile (2), et un élément (16) guidé dans la rainure excentrée (15) au moins pour déplacer la plaque de sol mobile (2), qui est réalisé au niveau de la paroi pivotante (3) ou qui est relié à la paroi pivotante (3), et
la gorge excentrée (15) est conçu de telle sorte qu'un pivotement de la paroi pivotante (3) depuis sa position de départ dans sa position de douche ou depuis sa position de douche dans sa position de via l'élément guidé (16) dans la gorge excentrée (15) entraîne une transmission mécanique des forces, depuis la paroi pivotante (3) jusque sur la plaque de sol mobile (2), qui provoque un déplacement correspondant de la plaque de sol (2) depuis sa position de départ dans sa position de douche ou depuis sa position de douche dans sa position de départ.

4. Moyen de douche composé d'une combinaison de l'une des revendications 1 ou 2 avec respectivement la revendication 3.

5. Moyen de douche selon l'une quelconque des revendications 2 à 4, **caractérisé en ce que**
il est prévu un lavabo (4) au niveau de la paroi pivotante (3).

6. Moyen de douche selon la revendication 5,
**caractérisé en ce que**
le lavabo (4) prévu au niveau de la paroi pivotante (3) peut être pivoté lors du pivotement de la paroi pivotante (3) depuis sa position de départ dans sa position de douche au moins en partie au-dessus d'une cuvette de toilette (6).

7. Moyen de douche selon l'une quelconque des revendications 1 à 6, **caractérisé en ce que**
la plaque de sol mobile (2), dans l'état monté du moyen de douche (1) dans un camping-car, est agencée au moins dans une zone praticable (22) par la personne au moins approximativement à une hauteur qui est prédéfinie par un plancher de camping-car (9) praticable par la personne à côté du moyen de douche.

8. Moyen de douche selon l'une quelconque des revendications 1 à 7, **caractérisé en ce que**
le mécanisme d'actionnement (20) présente un mécanisme d'actionnement électromécanique (25) qui déplace la plaque de sol (2) au moins de manière indirecte.

9. Moyen de douche selon l'une quelconque des revendications 1 à 8, **caractérisé en ce que**
dans la position de départ, l'écoulement (11) est entièrement recouvert par la plaque de sol mobile (2), et/ou
dans la position de départ, la plaque de sol mobile (2) peut être retirée par une personne.

10. Camping-car comprenant un moyen de douche selon l'une quelconque des revendications 1 à 9,
**caractérisé en ce que**
il est prévu un plancher de camping-car (9) à côté du moyen de douche (1), dans la position de départ, la plaque de sol mobile (2) est jointe au moins sensiblement en continu et au moins sensiblement sans interstice au plancher de camping-car (9), et
dans la position de douche de la plaque de sol mobile (2), l'écoulement (11) est ouvert entre la plaque de sol mobile (2) et le plancher de camping-car (9).
